# EUROPÄISCHE PATENTSCHRIFT

(11) **EP 1 733 955 B1**
(45) Veröffentlichungstag und Bekanntmachung des Hinweises auf die Patenterteilung: **26.03.2008**
(21) Anmeldenummer: 06012108.4
(22) Anmeldetag: 13.06.2006
(51) Int. Cl.: B62D 33/02, B60P 7/08

(54) **Vorrichtung zur Sicherung einer Ladung**
Device for securing of loads
Dispositif d'immobilisation de charge

(30) Priorität: 17.06.2005 DE 102005028525
(43) Veröffentlichungstag der Anmeldung: 20.12.2006
(73) Patentinhaber: Fahrzeugwerk Bernard Krone GmbH, 48480 Spelle (DE)
(72) Erfinder: Krone, Bernard, Dr., 48480 Spelle (DE); Möhlenkamp, Wilhelm, 49757 Werlte (DE)
(74) Vertreter: Pott, Ulrich

(56) Entgegenhaltungen:
- DE-U1- 9 303 415
- FR-A- 2 511 316
- US-A- 5 398 832

## Beschreibung

Die Erfindung betrifft eine Vorrichtung zur Sicherung einer Ladung eines Fahrzeugs, vorzugsweise zum Schutz vor Querverlagerungen der Ladung, mit zumindest einem in unterschiedlichen Positionen in Fahrzeuglängsrichtung am Ladeboden lösbar festlegbaren Querbalken, wobei zumindest ein in unterschiedlichen Positionen in Fahrzeugquerrichtung lösbarer, an dem als Unterlage für die Ladung vorsehbaren Querbalken festlegbarer Stützbalken vorgesehen ist.

Beliebte, weil leicht handhabbare Sicherungsmittel, die zur Sicherung der Ladung auf einem Ladeboden eines Lastkraftfahrzeugs verwendet werden, sind Zurrgurte. Mit diesen wird bei vielen Transporten die sogenannte Niederzurrung zur Sicherung der Ladung realisiert, das heißt, der Zurrgurt oder allgemein ein Spannmittel wird über die Ladung gelegt und anschließend gespannt. Wichtig ist hierbei, daß durch die Vorspannung des Spannmittels der Vertikalanteil der Vorspannung so groß ist, daß durch die zusätzlich zwischen Ladung und Ladeboden wirkenden Reibungskräfte eine Bewegung der Ladung sowohl in Fahrzeuglängsrichtung als auch in Fahrzeugquerrichtung in allen Beschleunigungssituation, denen die Ladung ausgesetzt ist, verhindert wird. Hierzu ist es angezeigt, die Spannmittel möglichst senkrecht direkt neben der Ladung zum Ladeboden hinzuführen und dort festzulegen. Aufgrund fehlender Befestigungsmöglichkeiten ist dieses jedoch häufig nicht möglich, Die Ladung ist vielmehr bei niedrigen Zurrwinkeln über eine Verspannung des Spannmittels in den Seitenbereichen des Ladebodens nur ungenügend befestigt. Die hierbei zusätzlich von den Spannmitteln aufgebrachten Reibungskräfte zwischen Ladung und Ladeboden sind häufig nicht geeignet, eine Sicherung der Ladung in Fahrzeuglängs- und/oder -querrichtung zu ermöglichen.

Zur Lösung dieses Problems wurde vorgeschlagen, einen in unterschiedlichen Positionen in Fahrzeuglängsrichtung am Ladeboden lösbar festlegbaren Querbalken vorzusehen, der über in den Seitenbereichen des Ladebodens befindliche sogenannte "Multi-Lock"-Leisten bzw. einen Multi-Lock-Rahmen arretierbar ist und der quer über den Ladeboden reichende Sicherungslöcher aufweist. Mit Hilfe dieser Sicherungslöcher lassen sich so die vertikalen Anteile der Vorspannungen erhöhen, da die Zurrmittel nicht mehr bis in die Seitenbereiche des Ladebodens geführt werden müssen. Insbesondere für nicht gebündelte Rohre, die sehr leicht in Querrichtung beweglich sind, ist diese Art der Festlegung jedoch noch nicht immer ausreichend.

Aus dem Dokument DE 93 03 415.6 U1 ist eine Ladungssicherung bekannt, die ein Trägergestell und zur seitlichen Ladungsabstützung Rungen aufweist. Diese Rungen sind als aufrecht stehende Stützbalken ausgebildet, die über einen Schlitten an einem Querbalken einer Beladungsfläche gleitverschieblich geführt sind. Über eine Spannvorrichtung in Gestalt eines Schraub-Klemm-Elementes soll die Runge an dem Querträger zu sichern sein. Eine solche Sicherung ist jedoch bei schweren Ladungsgütem wie beispielsweise metallischen Rohren und dergleichen nur schwer zu vollziehen. Ausgehend von diesem Stand der Technik ist es Aufgabe der vorliegenden Erfindung, eine Vorrichtung zur Sicherung einer Ladung, insbesondere zum Schutz von Querverlagerungen der Ladung, zu verbessern.

Zur Lösung dieser Aufgabe ist eine Vorrichtung gemäß Patentanspruch 1 vorgeshen. Hinsichtlich wesentlicher weiterer Ausgestaltungen dieser Vorrichtung wird auf die Ansprüche 2 bis 17 verwiesen.

Der Stützbalken, der vorzugsweise im wesentlichen vertikal ausgerichtet ist, kann alleine oder zumindest in Kombination mit einem Spannmittel dadurch eine Querverlagerung der Ladung wirksam verhindern, daß er direkt neben dieser positioniert wird. Hierzu ist der Stützbalken auf dem Querbalken in unterschiedlichen Positionen -beispielsweise alle 3,5 cm- in Fahrzeugquerrichtung festlegbar und kann damit unterschiedlich breiten Ladungen angepaßt werden. Durch die Verwendung von einem oder mehreren der in Längsrichtung verschiebbaren Querbalken sowie einem oder mehreren der Stützbalken wird hiermit eine sichere Abstützung verschieden breit ausgebildeter Ladungen in in Fahrzeuglängsrichtung unterschiedlichen Positionen erreicht.

Während der aus dem Stand der Technik bekannte Querbalken in Fahrzeuglängsrichtung lediglich als Anschlag dient, ist ein nach der Erfindung vorgesehener Querbalken ebenfalls auch als Unterlage für die Ladung einsetzbar. Hierfür weist er vorzugsweise eine Auflage aus einem hartem Kunststoff oder beispielsweise aus Holz auf.

Durch die Verwendung jeweils zweier Stützbalken mit einem Querbalken entsteht eine U-förmige Aufnahme für die Ladung. Diese ist vorteilhafterweise insbesondere für Stahlrohre geeignet, die für den Transport auf dem Querbalken zwischen den Stützbalken abgelegt werden können, ohne das weitere Unterlagen wie Kanthölzer benötigt werden. Nach dem Transport können die Stahlrohre auf einfache Weise von beispielsweise einem Gabelstapler wieder von dem Ladeboden abgehoben werden. Für Leertransporte oder Transporte von Gütern, die anderweitig auf dem Ladeboden festgelegt und bei denen die Stütz- und Querbalken nicht verwendet werden, können diese vorteilhafterweise in unterhalb des Fahrzeugbodens befindlichen Rungendepots oder Palettenkästen aufbewahrt werden. Im Bedarfsfall können auch Fahrzeuge für Spezialtransporte, bzw. für den Transport von Coils oder Papierrollen mit dem erfindungsgemäßen System zur Sicherung der Ladung ausgestattet werden. Diese Fahrzeuge können dann alternativ oder ergänzend zu dem Transport ihrer üblichen Ladung für den Transport von insbesondere rohrförmiger Ladung verwendet werden. Die erfindungsgemäße Vorrichtung ist daher auch hervorragend als Ergänzung bereits vorhandener Transportfahrzeuge verwendbar.

Nach einer weiteren vorteilhaften Ausbildung der Erfindung ist der Stützbalken aus einer Nichtgebrauchsstellung um eine Achse in Fahrzeuglängsrichtung in eine Gebrauchsstellung verschwenkbar, wobei sich die Schwenkachse vorteilhafterweise auf dem oder oberhalb des Querbalkens befindet. Da der Stützbalken in der Gebrauchsstellung auch am Querbalken festgelegt ist, dient diese Verschwenkung ebenfalls der Festlegung des Stützbalkens. Beispielsweise kann durch die Verschwenkung ein Ende des Stützbalkens zum Eingriff in eine Ausnehmung des Querbalkens gebracht werden. Durch den Eingriff in die Ausnehmung des Querbalkens wird gleichzeitig die Schwenkbewegung begrenzt, was zusätzlich durch einen Anschlag, über den sich der Stützbalken an dem Querbalken oder an dem Fahrzeugboden abstützt, unterstützt werden kann.

Vorteilhafterweise werden der oder die Stützbalken durch eine quer zur Fahrzeuglängsachse gerichtete und von der Ladung selbst ausgeübte Kraft in einer der Sicherungsposition entsprechenden Gebrauchsstellung festgelegt. Wird bei einer U-förmigen Aufnahme, bei der die Stützbalken durch ein Voneinander-Wegschwenken, also zu den jeweiligen Seiten des Ladebodens hin, in ihre jeweilige vertikale Sicherungsposition bringbar sind, die Ladung zwischen den Stützbalken abgelegt und bewirkt die Ladung eine Kraft zu den Seiten des Fahrzeugs hin, werden die Stützbalken festgelegt.

Insbesondere bei der Beladung des Ladebodens mit mehreren, übereinander liegenden Reihen von Rohren haben diese die Tendenz, nach außen, also zu den Seiten des Ladebodens hin, von diesem herunter zu rollen. Es wird also von den Rohren eine Kraft quer zur Fahrzeuglängsachse hin ausgeübt, die die Stützbalken in einer in etwa vertikalen Sicherungsposition hält. Werden die Rohre darüberhinaus durch ein zusätzliches Spannmittel dergestalt mit Kraft beaufschlagt, daß die Bewegung der Rohre nach oben hin begrenzt ist, ist eine sichere Festlegung der Rohre auf einfache Weise möglich. Die Stützbalken müssen nun nicht mehr über zusätzliche Verschlußmittel gesichert werden.

Darüber hinaus kann ein Anschlag des Stützbalkens auch allgemein der zusätzlichen Abstützung des Stützbalkens und der Sicherung desselben gegen ein in Richtung der Seiten gerichtetes Verbiegen des Stützbalkens dienen.

Bei einer vorteilhaften Ausgestaltung der Erfindung ist der Querbalken einstückig ausgebildet und mit einer Befestigungseinrichtung, vorzugsweise im Bereich seiner Fahrzeuglängsseiten, versehen. Ein solcher Querbalken kann beispielsweise im Bereich seiner Seiten Sicherungsstifte aufweisen, die in einen bekannten Multi-Lock-Rahmen eingreifen. Hierdurch ist eine Festlegung des Querbalkens sowohl in Fahrzeuglängsrichtung als auch in Fahrzeugquerrichtung gewährleistet.

Weitere Vorteile und Einzelheiten der Erfindung sind den weiteren Unteransprüchen sowie der nachfolgenden Figurenbeschreibung entnehmbar. In den schematischen Zeichnungen zeigt:
- Fig. 1: Ein Fahrzeug mit einem Ladeboden und einer Vorrichtung zur Sicherung der Ladung,
- Fig. 2: einen Teil eines zweiteiligen Querbalkens,
- Fig. 3: den zweiten Teil eines zweiteiligen Querbalkens,
- Fig. 4: einen verschwenkbaren Stützbalken,
- Fig. 5: den Gegenstand nach Fig. 2 in einer Seitenansicht,
- Fig. 6: den Gegenstand nach Fig. 2 in einer Draufsicht,
- Fig. 7: den Gegenstand nach Fig. 3 in einer Seitenansicht,
- Fig. 8: den Gegenstand nach Fig. 3 in einer Draufsicht,
- Fig. 9: den Gegenstand nach Fig. 2 in einem Schnitt entlang IX-IX,
- Fig. 10: den Gegenstand nach Fig. 3 in einem Schnitt entlang X-X,

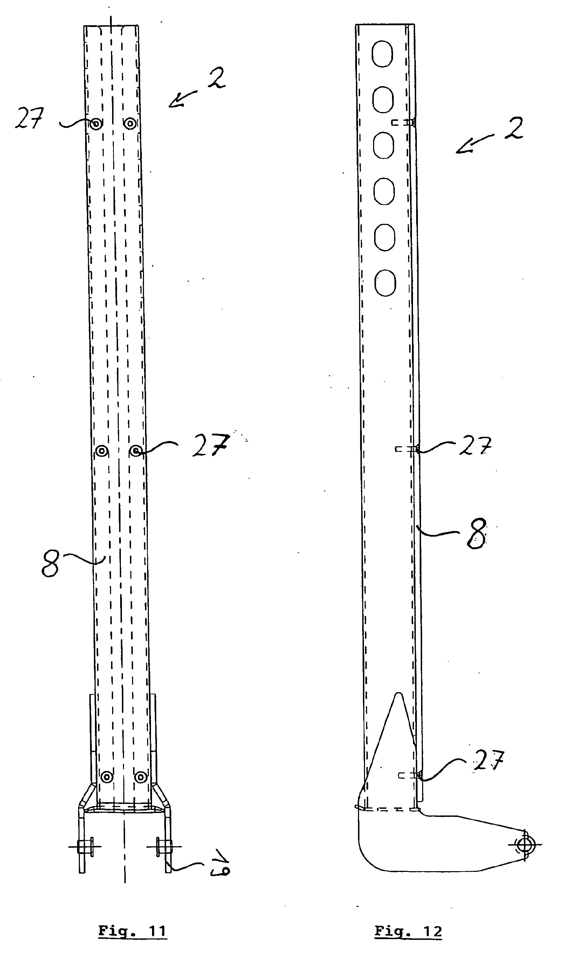

- Fig. 11: den Gegenstand nach Fig. 4 in einer Draufsicht,
- Fig. 12: den Gegenstand nach Fig. 4 in einer Seitenansicht und
- Fig. 13: den Gegenstand nach Fig. 4 in einem Querschnitt entlang XIII-XIII.

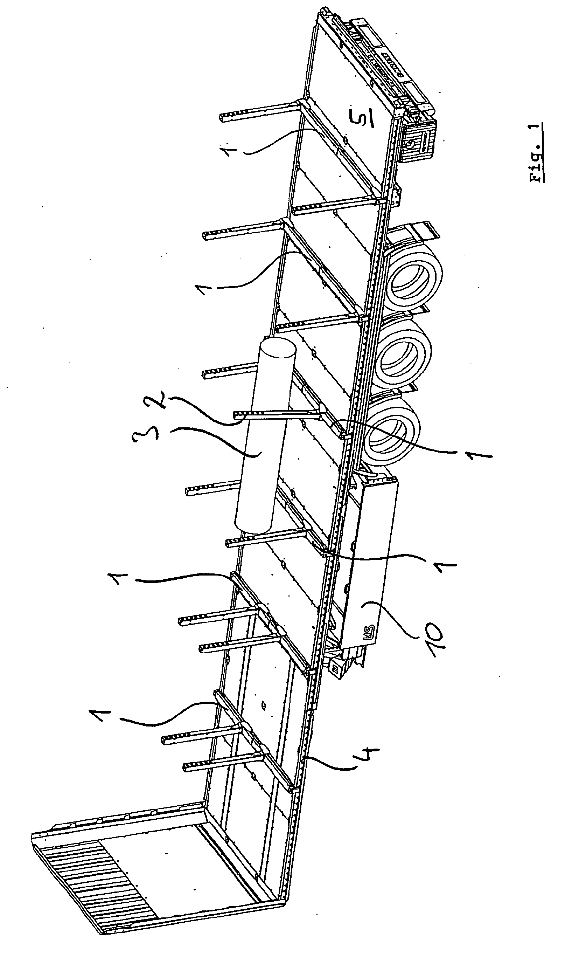

Fig. 1 zeigt ein Fahrzeug mit einem Ladeboden 5, hier einen Sattelauflieger, der mit einer erfindungsgemäßen Vorrichtung zur Sicherung der Ladung 3 eines Fahrzeugs ausgestattet ist. Eine Reihe von Querbalken 1 dient der Festlegung jeweils zweier in unterschiedlichen Positionen in Fahrzeugquerrichtung lösbar angeordneter Stützbalken 2. Zwischen jeweils zwei Stützbalken 2, auch Rungen genannt, kann eine insbesondere rohrförmige Ladung 3 angeordnet werden. Die Querbalken 1 sind in unterschiedlichen Positionen in Fahrzeuglängsrichtung in jeweils einer sogenannten Multi-Lock-Leiste 4/bzw. an einem an den Seiten des Fahrzeugladebodens 5 angeordneten Multi-Lock-Rahmen 4 festgelegt. Der Multi-Lock-Rahmen 4 weist in diskreten Abständen zueinander befindliche Sicherungslöcher auf, in die eine Befestigungseinrichtung des Querbalkens, eingreifen kann. Falls kein Multi-Lock-Rahmen 4 vorgesehen ist, können die Querbalken 1 mittels der Befestigungsvorrichtung auch anders festgelegt werden.

Ein in dem Bereich eines Querbalkens 1 befindliches Ende der Stützbalken 2 ist dergestalt ausgebildet, daß es auf der in Fahrzeuglängsrichtung hinteren und vorderen Seite des Querbalkens 1, also an seinen zwei Längsseiten, abstützbar ist, wobei der überwiegende Rest des Stützbalkens 2 direkt oberhalb des Querbalkens 1 verbleibt.

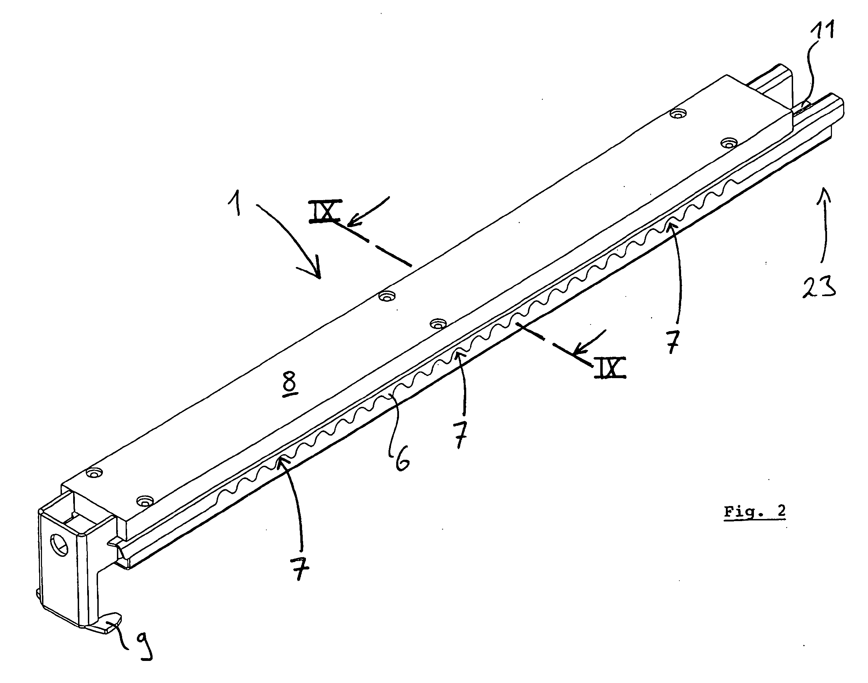

Durch den in Fig. 1 leicht schräggestellt gezeichneten Stützbalken 2 wird verdeutlicht, wie die Stützbalken 2 in ihre jeweilige Gebrauchsstellung gebracht werden können. Dieses geschieht, wie bereits oben beschrieben, durch Verschwenken des Stützbalkens 2 um eine Schwenkachse in Fahrzeuglängsrichtung bzw. eine damit einhergehende, eine Kurve überstreichende Bewegung des unteren Endes 13 des Stützbalkens 2. Wie weiterhin der Fig. 2 zu entnehmen ist, weist ein Querbalken 1 eine Schiene oder einen Schenkel 6 mit einer Rasterung mit mehreren Ausnehmungen 7 auf. In diese Ausnehmungen 7 greift im Verlauf der Schwenkbewegung das untere Ende 13 bzw. die unteren Enden 13 der Stützbalken 2 ein.

Vorzugsweise ist der Stützbalken 2 an dem Querbalken 1 selbst oder an einem Fahrzeugboden 5 abgestützt. Bei der hier dargestellten Ausführungsform eines Stützbalkens 2 stützt sich dieser einerseits direkt auf der Auflagefläche 8, die aus Holz und/oder einem harten Kunststoff besteht, und andereseits über den Eingriff in die Ausnehmungen 7 ab. In seiner vertikalen Gebrauchsstellung ist der Stützbalken 2 dann gegen eine Querbewegung gesichert. Hierbei befindet sich die Schwenkachse, um die der Stützbalken zu verschwenken ist, im Bereich auf oder oberhalb der Auflagefläche. Bei Belastung des Stützbalkens durch eine von einer Ladung 3 ausgeübte Kraft, wird dieser mit seinem Ende 13 aufgrund der ausgeübten Hebelkraft über das vorzugsweise hakenförmige Ende 13 des Stützbalkens 2 stärker in die Ausnehmung 7 gedrückt, wodurch der Stützbalken 2 umso sicherer festgelegt ist. Es versteht sich, daß die Ladung 3 hierzu von einer Seite gegen den Stützbalken 2 gelegt wird, auf der auch das hakenförmige Ende 13 des Stützbalkens 2 angeordnet ist. Bei anderen Ausführungsformen kann die Schwenkachse auch an anderen Positionen, beispielsweise im Bereich des hakenförmigen Endes 13, vorzugsweise im Bereich des Bolzens 21, befindlich sein.

Werden die Quer- und Stützbalken 1 bzw. 2 nicht benötigt, können sie in einem Rungen- bzw. Balkendepot 10 unterhalb des Fahrzeugbodens verstaut werden.

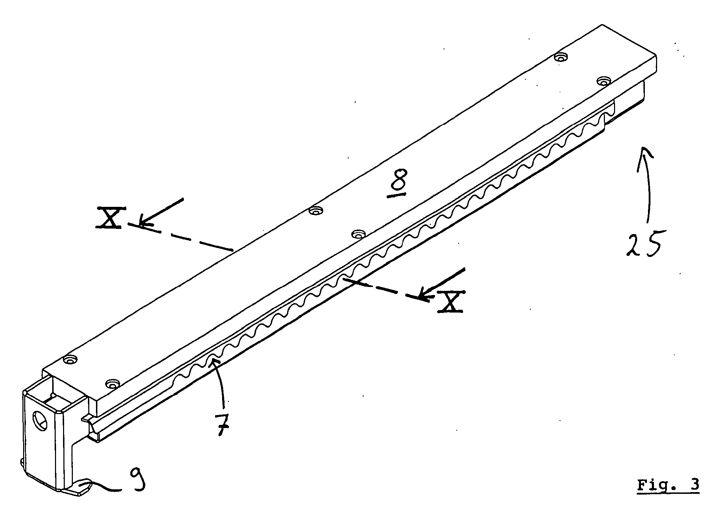

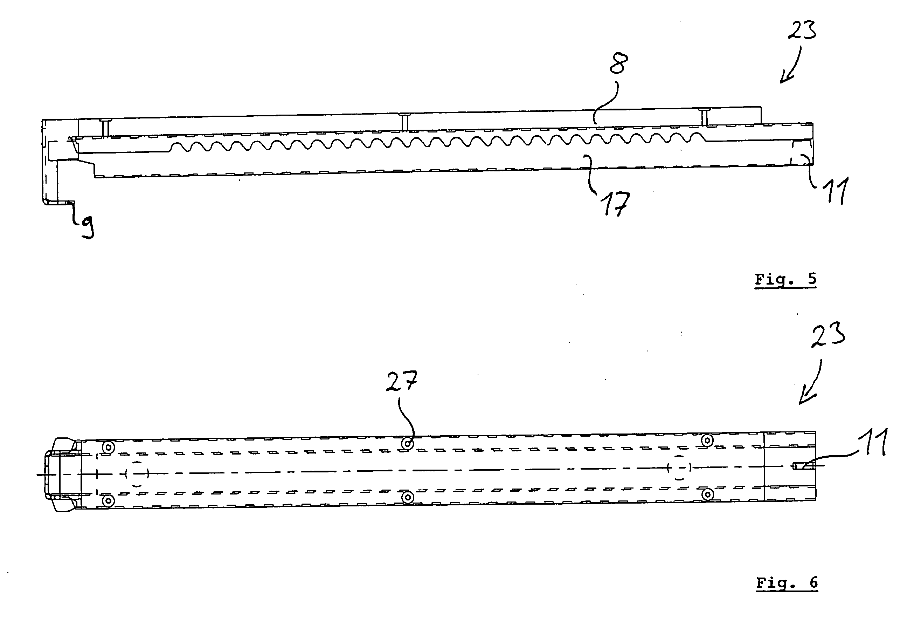

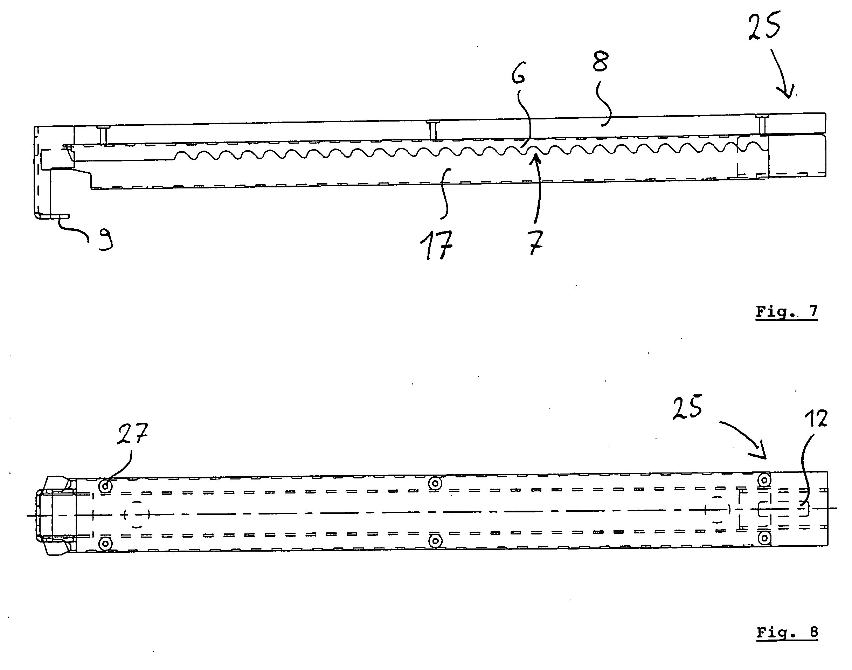

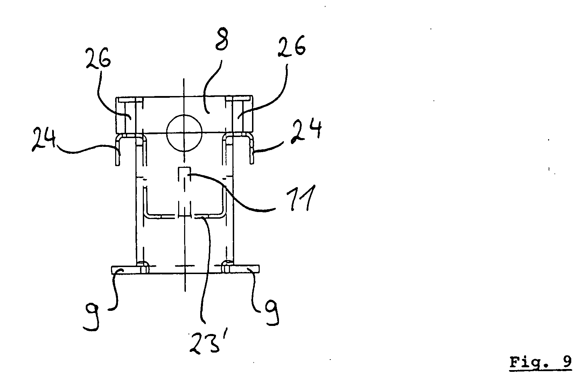

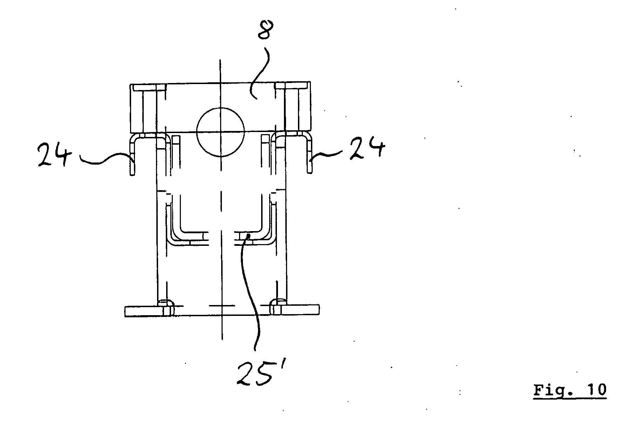

In Fig. 2 ist ein Teil eines zweiteilig ausgebildeten Querbalkens 1 gezeigt. Der in Fig. 3 gezeigte zweite Teil des Querbalkens 1 wird mit seinen Sicherungsstiften oder - laschen 9 auf der den Sicherungsstiften 9 des ersten Teils des Querbalkens 1 (Fig. 2) gegenüberliegenden Seite des Fahrzeugsbodens in die entsprechenden Sicherungslöcher des Multi-Lock-Rahmens 4 eingesetzt und auf bzw. in den in Fig. 2 gezeigten Teil des Querbalkens 1 eingeschwenkt. Hierbei greift ein Dorn 11 des in Fig. 2 gezeigten Teils des Querbalkens 1 in eine entsprechende Ausnehmung 12 des zweiten Teils des Querbalkens 1 ein (vergl. Fig. 5 - 8). Bis auf die ineinandergreifenden Enden 23, 25 der beiden Teile des Querbalkens 1 empfiehlt es sich, diese im wesentlichen gleich auszubilden. In dem Endbereich 25 ist das Hohlprofil zu einem Teil 25' verjüngt, welches entsprechend in einen Rahmenteil 23' eingreift (vergl. Fig. 9 und 10). Durch die Beladung des Querbalkens 1 in dem Bereich der ineinandergreifenden Enden wird verhindert, daß die beiden Teile des Querbalkens 1 außer Eingriff geraten, so daß die Festlegung des Querbalkens immer gewährleistet ist.

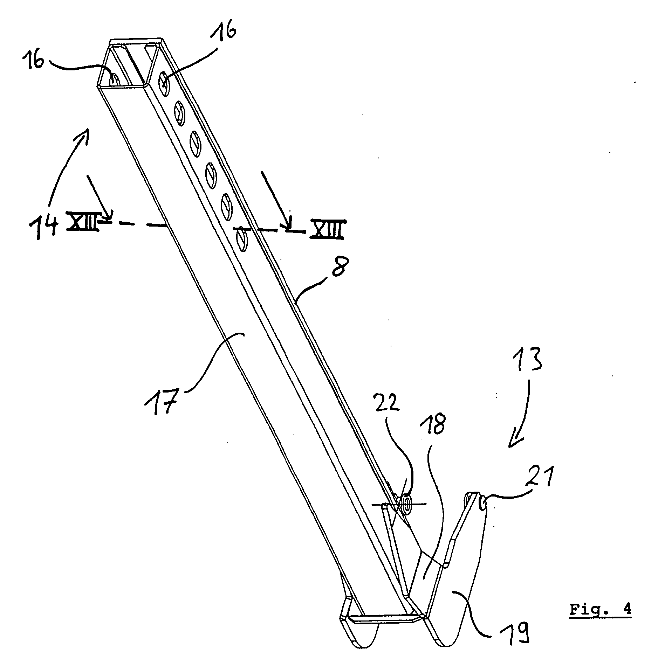

In Fig. 4 ist der Stützbalken 2 einer erfindungsgemäßen Vorrichtung perspektivisch dargestellt. Während das hakenförmige Ende 13 der Festlegung des Stützbalkens 2 an dem Querbalken 1 dient, kann an dem entgegengesetzten Ende 14 vorteilhafterweise ein Balkenelement eingeschoben werden und über die Löcher 16 beispielsweise mit einem Bolzen gesichert werden. Hierdurch ist der Stützbalken 2 verlängerbar ausgebildet. Während bei der dargestellten Ausführungsform die Verlängerung vorteilhafterweise in den aus einem Hohlprofil bestehenden Stützbalken 2 einführbar ist, sind auch andere Möglichkeiten der Verlängerung denkbar. Beispielsweise kann der Stützbalken bereits ab Werk mit einer innerhalb des Hohlraums des Hohlprofils lagerbaren und entsprechend herausschiebbaren Verlängerung ausgestattet sein.

Der Stützbalken 2 und/oder auch der Querbalken 1 sind zu wesentlichen Teilen aus einem Stahlhohlprofil 17 gefertigt. Hierdurch wird ein guter Kompromiß zwischen Gewicht und Festigkeit des stützenden Elementes erreicht.

Der Stützbalken 2 kann sowohl einstückig hergestellt sein, beispielsweise aus einem Gußstück, er kann aber auch wie in Fig. 4 dargestellt, aus mehreren aneinander festgelegten Stücken bestehen. Hierfür ist das Stahlhohlprofil 17 (Fig. 4) an dem Formstück 18 befestigt und bildet mit diesem zusammen das hakenförmige Ende 13 aus. Das Formstück 18 wiederum weist zwei Füße 19 mit einem an den Enden angeordneten Bolzen 21 auf. Bei Gebrauch des Stützbalkens 2 werden die Bolzen 21 in die Ausnehmungen 7 des Querbalkens 1 verschwenkt. Teile der Schiene 6 sind dann zwischen Bolzenkopf 22 und Fuß 19 angeordnet und verhindern zusammen mit den Füßen 19 eine Verschwenkung oder Drehung des Stützbalkens 2 um eine senkrechte Achse. Stütz- und Querbalken 2, bzw. 1 sind sicher aneinander festgelegt.

Während die Auflagefläche 8 bzw. die Auflage 8 beispielsweise aufgeklebt werden kann, ist es darüber hinaus sinnvoll, diese mit in der Holzplatte versenkten Schrauben an dem Profil 17 zu befestigen. Hierzu wird ein Gewinde in das Metallhohlprofil geschnitten bzw. gegebenenfalls die Schraube mit einer Mutter gekontert. Eine solche lösbare Festlegung der Auflage 8 ist für die Ersetzung der Auflage 8 hilfreich, wenn diese aufgrund ihres Gebrauchs abnutzt.

Genauso wie der Stützbalken 2 kann der Querbalken 1 aus einem oder mehreren fest ineinander angeordneten Teilen bestehen. Aus den Figuren 5 bis 8 ist hierbei ersichtlich, daß die Auflage 8 eines Teils des Querbalkens 1 nicht die komplette Länge des Teils bedeckt, da im Endbereich 23 des Querbalkens 1 Platz für das Einschwenken Endbereiches 25 des zweiten Teils des Querbalkens (bei Überführung des Querbalkens 1 in seine Gebrauchsstellung) vorzuhalten ist. Sowohl der eine als auch der andere Teil des Querbalkens 1 weisen als Grundstruktur ein Doppel-U-Profil auf, wobei die in den Seitenbereichen ausgebildeten Schenkel 24 des Doppel-U-Profils, die den Schienen 6 entsprechen, gleichzeitig die Ausnehmungen 9 für die Anlage des Bolzens 21 aufweisen. Die in den Auflagen 8 befindlichen Löcher 26 für die Schrauben 27, mit denen die Auflage 8 an dem Profil befestigt wird, sind so dimensioniert, daß die verwendeten Schrauben 27 vorzugsweise mindestens einen Millimeter versenkt werden. Hierdurch wird die Ladung 3 nicht durch Kratzer oder ähnliches beschädigt. Der in Fig. 9 angedeutete Dorn 11 des einen Teils des Querbalkens 1 kann ebenfalls einstückig mit dem Doppel-U-Profil ausgebildet sein, er kann aber auch anderweitig angebracht werden.

Die Stützbalken 2 einer erfindungsgemäßen Ladungssicherungsvorrichtung sind beispielsweise so dimensioniert, daß sie bis zu einer Höhe von 1,20 m ab Oberkante des Querbalkens 1 eine Kraft von 25 Tonnen über die Ladelänge aufnehmen können.

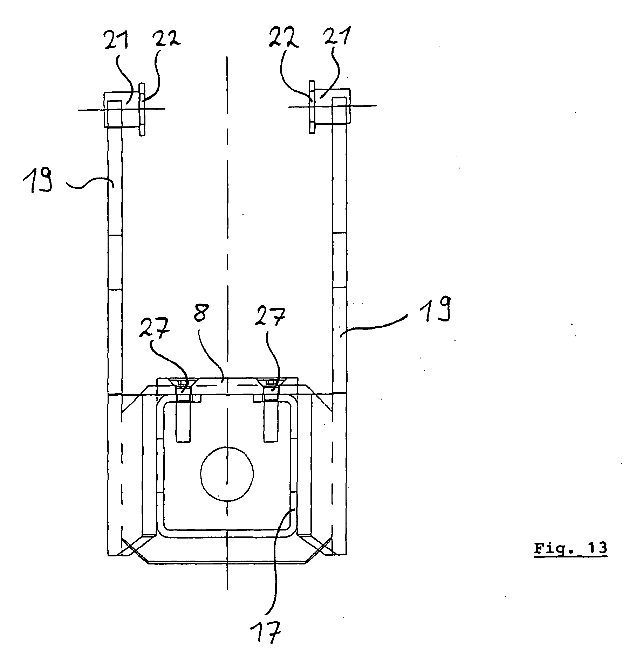

In Fig. 13 ist exemplarisch die Festlegung einer Auflage 8 an einem Hohlprofil 17 mittels Schrauben 27 gezeigt.

## Patentansprüche

1. Vorrichtung zur Sicherung einer Ladung (3) eines Fahrzeugs, vorzugsweise zum Schutz vor Querverlagerungen der Ladung (3), mit zumindest einem in unterschiedlichen Positionen in Fahrzeuglängsrichtung am Ladeboden (5) lösbar festlegbaren Querbalken (1), wobei zumindest ein in unterschiedlichen Positionen in Fahrzeugquerrichtung lösbar an dem als Unterlage für die Ladung (3) vorsehbaren Querbalken (1) festlegbarer Stützbalken vorgesehen ist, **dadurch gekennzeichnet, daß** ein hakenförmiges Ende (13) des Stützbalkens (2) zum Eingriff in eine Ausnehmung des Querbalkens (1) ausgebildet ist, daß das hakenförmige Ende (13) des Stützbalkens durch Verschwenken desselben in die Ausnehmung eingreift und daß der Querbalken (1) vorzugsweise auf zwei Seiten mit einer Rasterung zur Positionierung des Stützbalkens versehen ist.

2. Vorrichtung nach Anspruch 1, **dadurch gekennzeichnet, daß** der Stützbalken (2) durch eine quer zur Fahrzeuglängsachse gerichtete und von der Ladung (3) ausgeübte Kraft in einer Sicherungsposition festlegbar ist.

3. Vorrichtung nach Anspruch 1 oder 2, **dadurch gekennzeichnet, daß** der Stützbalken (2) um eine Achse in Fahrzeuglängsrichtung in eine Gebrauchsstellung verschwenkbar ist.

4. Vorrichtung nach einem der Ansprüche 1 bis 3, **dadurch gekennzeichnet, daß** die Rasterung halbseitig offene Ausnehmungen (9) zur Aufnahme eines endseitigen Bolzens (21) des Stützbalkens aufweist.

5. Vorrichtung nach einem der Ansprüche 1 bis 4, **gekennzeichnet durch** einen Anschlag, über den sich der Stützbalken (2) an dem Querbalken (1) oder an dem Fahrzeugboden (5) abstützt.

6. Vorrichtung nach einem der Ansprüche 1 bis 5, **dadurch gekennzeichnet, daß** der Stützbalken (2) durch Anfügen eines mit diesem verbundenen und an dem Stützbalken (2) arretierbaren Balkenelements verlängerbar ist.

7. Vorrichtung nach einem der Ansprüche 1 bis 6, **dadurch gekennzeichnet, daß** der Querbalken (1) in in den Seitenbereichen des Ladebodens (5) befindliche Sicherungslöcher eingreift.

8. Vorrichtung nach einem der Ansprüche 1 bis 7, **dadurch gekennzeichnet, daß** der Querbalken (1) zumindest zweiteilig ist und die beiden aneinanderliegenden Endbereiche (23, 25) miteinander arretierbar sind.

9. Vorrichtung nach Anspruch 8, **dadurch gekennzeichnet, daß** der Querbalken (1) durch Verschwenken zumindest eines Teils um eine Achse in Fahrzeuglängsrichtung festlegbar ist, wobei ein Dorn (11) eines Teils in eine Ausnehmung (12) eines anderen Teils eingreift.

10. Vorrichtung nach einem der Ansprüche 1 bis 9, **dadurch gekennzeichnet, daß** der Querbalken (1) einstückig ausgebildet und vorzugsweise im Bereich seiner Fahrzeuglängsseiten mit einer Befestigungseinrichtung versehen ist.

11. Vorrichtung nach einem der Ansprüche 1 bis 10, **dadurch gekennzeichnet, daß** der Querbalken (1) und/oder der Stützbalken (2) mit einer Auflage (8) aus Holz und/oder einem harten Kunststoff versehen ist.

12. Vorrichtung nach einem der Ansprüche 1 bis 11, **dadurch gekennzeichnet, daß** der Stützbalken (2) ein Stahlhohlprofil (17) aufweist.

13. Vorrichtung nach einem der Ansprüche 1 bis 12, **dadurch gekennzeichnet, daß** der Querbalken (1) ein Stahlhohlprofil (17) aufweist.

14. Vorrichtung nach einem der Ansprüche 1 bis 13, **dadurch gekennzeichnet, daß** der Stützbalken (2) in der Gebrauchsstellung mit seinem die Ladung sichernden Bereich oberhalb des Querbalkens (1) angeordnet ist und das Ende (13) des Stützbalkens (2) auf zwei Längsseiten des Querbalkens (1) festlegbar ist.

15. Vorrichtung nach einem der Ansprüche 1 bis 14 mit einem weiteren Stützbalken (2), **dadurch gekennzeichnet, daß** der Stützbalken (2) mit einem weiteren Stützbalken (2) durch Voneinanderwegschwenken derselben in eine vertikale Sicherungsposition mit dem Querbalken (1) eine U-förmige Aufnahme für die Ladung (3) ausbildet.

16. Vorrichtung nach einem der Ansprüche 1 bis 15, **dadurch gekennzeichnet, daß** der Stützbalken (2) durch seine Gewichtskraft in stabiler, der Gebrauchsstellung entsprechender Lage positionierbar ist.

17. Fahrzeug mit einem Ladeboden (5), **gekennzeichnet durch** eine Vorrichtung zur Sicherung einer Ladung (3) nach einem der vorherigen Ansprüche.

## Claims

1. Arrangement for securing a load (3) on a vehicle, and preferably for protecting the load (3) against transverse displacements, having at least one transverse bar (1) which can be releasably locked to the load-carrying floor (5) in different positions in the longitudinal direction of the vehicle, at least one support bar being provided which can be releasably locked, in different positions in the transverse direction of the vehicle, to the transverse bar (1), which latter can be provided as a bottom support for the load, **characterised in that** a hook-shaped end (13) of the support bar (2) is designed to engage in a recess in the transverse bar (1), **in that** the hook-shaped end (13) of the support bar engages in the recess as a result of the support bar pivoting, and **in that** the transverse bar (1) is preferably provided on two sides with a latching means for positioning the support bar.

2. Arrangement according to claim 1, **characterised in that** the support bar (2) can be locked in a securing position by a force which Is directed transversely to the longitudinal axis of the vehicle and which is exerted by the load (3).

3. Arrangement according to claim 1 or 2. **characterised in that** the support bar (2) is pivotable to an operating position about an axis in the longitudinal direction of the vehicle.

4. Arrangement according to one of claims 1 to 3, **characterised in that** the latching means has recesses (9) which are open on one side to receive a pin (21) at the end of the support bar.

5. Arrangement according to one of claims 1 to 4, **characterised by** an abutment by means of which the support bar (2) is supported on the transverse bar (1) or on the floor (5) of the vehicle.

6. Arrangement according to one of claims 1 to 5, **characterised in that** the support bar (2) can be lengthened by joining on a bar element which is connected to the support bar (2) and can be locked thereto.

7. Arrangement according to one of claims 1 to 6, **characterised in that** the transverse bar (1) engages in securing holes situated in the lateral regions of the load-carrying floor (5).

8. Arrangement according to one of claims 1 to 7, **characterised in that** the transverse bar (1) is in at least two parts and the two end-regions (23, 25) which rest against one another can be locked to one another.

9. Arrangement according to claim 8, **characterised In that** the transverse bar (1) can be locked as a result of at least one part pivoting about an axis in the longitudinal direction of the vehicle, in which case a spigot (11) on one part engages in a recess (12) in another part.

10. Arrangement according to one of claims 1 to 9, **characterised in that** the transverse bar (1) is in one piece and is provided with a fastening means, preferably in the region of its ends which are longitudinal to the vehicle.

11. Arrangement according to one of claims 1 to 10, **characterised in that** the transverse bar (1) and/or the support bar (2) is provided with a facing support (8) of wood and/or of a hard plastics material.

12. Arrangement according to one of claims 1 to 11, **characterised in that** the support bar (2) has a hollow steel profile (17).

13. Arrangement according to one of claims 1 to 12, **characterised in that** the transverse bar (1) has a hollow steel profile (17).

14. Arrangement according to one of claims 1 to 13, **characterised in that**, in the operating position, that region of the support bar (2) which secures the load is arranged above the transverse bar (1) and the end (13) of the support bar (2) can be locked on two longitudinal sides of the transverse bar (1).

15. Arrangement according to one of claims 1 to 14 having a further support bar (2), **characterised in that**, together with a further support bar (2), the support bar (2) forms, with the transverse bar (1), a U-shaped receptacle for the load (3) as a result of the support bars (2) pivoting away from one another to a vertical securing position.

16. Arrangement according to one of claims 1 to 15, **characterised in that** the support bar (2) can be positioned in a stable position corresponding to the operating position by the force generated by its weight.

17. Vehicle having a load-carrying floor (5), **characterised by** an arrangement for securing a load (3) according to one of the foregoing claims.

## Revendications

1. Dispositif d'immobilisation d'un chargement (3) d'un véhicule, de préférence de protection contre des déplacements transversaux du chargement (3), comportant au moins une traverse (1) capable d'être fixée de façon amovible au plateau de chargement (5) dans différentes positions dans le sens longitudinal du véhicule, au moins un montant d'appui (2) étant prévu, capable d'être fixé de façon amovible à la traverse (1), laquelle peut être prévue en tant qu'assise pour le chargement (3), dans différentes positions dans le sens transversal du véhicule, **caractérisé en ce qu'**une extrémité en forme de crochet (13) du montant d'appui (2) est conformée pour s'engager dans un évidement de la traverse (1), **en ce que** l'extrémité en forme de crochet (13) du montant d'appui (2) s'engage dans l'évidement par pivotement dudit montant et **en ce que** la traverse (1) est pourvue de préférence de deux côtés d'un crantage destiné au positionnement du montant d'appui (2).

2. Dispositif selon la revendication 1, **caractérisé en ce que** le montant d'appui (2) peut être fixé dans une position d'immobilisation par une force exercée par le chargement (3) et dirigée perpendiculairement à l'axe longitudinal du véhicule.

3. Dispositif selon la revendication 1 ou 2, **caractérisé en ce que** le montant d'appui (2) est capable de pivoter dans une position d'utilisation autour d'un axe dans le sens longitudinal du véhicule.

4. Dispositif selon l'une quelconque des revendications 1 à 3, **caractérisé en ce que** le crantage présente des évidements (9) ouverts en demi-lune destinés à recevoir un boulon (21) du côté d'une extrémité du montant d'appui (2).

5. Dispositif selon l'une quelconque des revendications 1 à 4, **caractérisé par** une butée, par l'intermédiaire de laquelle le montant d'appui (2) s'appuie sur la traverse (1) ou sur le plateau de chargement (5) du véhicule.

6. Dispositif selon l'une quelconque des revendications 1 à 5, **caractérisé en ce que** le montant d'appui (2) peut être rallongé en ajoutant un élément de montant relié à celui-ci et capable d'être bloqué au montant d'appui (2).

7. Dispositif selon l'une quelconque des revendications 1 à 6, **caractérisé en ce que** la traverse (1) s'engage dans des trous d'immobilisation situés dans les zones latérales du plateau de chargement (5).

8. Dispositif selon l'une quelconque des revendications 1 à 7, **caractérisé en ce que** la traverse (1) est au moins en deux parties et **en ce que** les deux zones d'extrémités (23, 25) mises bout à bout peuvent être bloquées entre elles.

9. Dispositif selon la revendication 8, **caractérisé en ce que** la traverse (1) peut être fixée par pivotement au moins d'une partie autour d'un axe dans le sens longitudinal du véhicule, un goujon (11) d'une partie s'engageant dans un évidement (12) d'une autre partie.

10. Dispositif selon l'une quelconque des revendications 1 à 9, **caractérisé en ce que** la traverse (1) est conformée d'une seule pièce et est pourvue de préférence dans la zone de ses côtés longitudinaux d'un dispositif de fixation.

11. Dispositif selon l'une quelconque des revendications 1 à 10, **caractérisé en ce que** la traverse (1) et/ou le montant d'appui (2) est/sont pourvu(s) d'un appui (8) en bois et/ou dans une matière synthétique dure.

12. Dispositif selon l'une quelconque des revendications 1 à 11, **caractérisé en ce que** le montant d'appui (2) présente un profilé creux en acier (17).

13. Dispositif selon l'une quelconque des revendications 1 à 12, **caractérisé en ce que** la traverse (1) présente un profilé creux en acier (17).

14. Dispositif selon l'une quelconque des revendications 1 à 13, **caractérisé en ce que** le montant d'appui (2) est disposé dans la position d'utilisation avec sa zone immobilisant le chargement au-dessus de la traverse (1) et **en ce que** l'extrémité (13) du montant d'appui (2) peut être fixée de deux côtés longitudinaux de la traverse (1).

15. Dispositif selon l'une quelconque des revendications 1 à 14 comportant un autre montant d'appui (2), **caractérisé en ce que** le montant d'appui (2) forme avec un autre montant d'appui (2) un logement en U destiné au chargement (3), par pivotement de ceux-ci de façon opposée l'un de l'autre dans une position d'immobilisation verticale par rapport à la traverse (1).

16. Dispositif selon l'une quelconque des revendications 1 à 15, **caractérisé en ce que** le montant d'appui (2) peut être positionné par son poids en position stable correspondant à la position d'utilisation.

17. Véhicule comportant un plateau de chargement (5), **caractérisé par** un dispositif d'immobilisation d'un chargement (3) selon l'une quelconque des revendications précédentes.
